# EUROPÄISCHE PATENTSCHRIFT

(11) **EP 1 918 135 B1**
(45) Veröffentlichungstag und Bekanntmachung des Hinweises auf die Patenterteilung: **01.07.2009**
(21) Anmeldenummer: 07021591.8
(22) Anmeldetag: 06.11.2007
(51) Int. Cl.: B60G 7/02

(54) **Haltevorrichtung für ein Achselement**
Retaining device for an axle element
Dispositif de support pour un élément d'essieu

(30) Priorität: 06.11.2006 DE 102006052218
(43) Veröffentlichungstag der Anmeldung: 07.05.2008
(73) Patentinhaber: SAF-HOLLAND GmbH, 63856 Bessenbach (DE)
(72) Erfinder: Hock, Helmut, 63856 Bessenbach (DE)
(74) Vertreter: Bauer, Clemens

(56) Entgegenhaltungen:
- EP-A- 0 352 541
- EP-A- 1 777 085
- DE-A1- 1 555 263
- DE-A1- 10 308 347

## Beschreibung

Die vorliegende Erfindung bezieht sich auf eine Haltevorrichtung für ein Achselement, insbesondere für einen Längslenker eines Fahrzeugs, wie eines Kraftfahrzeugs oder Nutzfahrzeugs, sowie auf ein Achssystem für ein Fahrzeug, ebenfalls insbesondere für ein Kraftfahrzeug oder Nutzfahrzeug.

Die in Frage stehenden Haltevorrichtungen sind hinlänglich aus dem Stand der Technik bekannt. So offenbart beispielsweise die EP 0 836 984 B1 eine Haltevorrichtung für einen Längslenker. Die Haltevorrichtung - auch Haltebock genannt - dient dazu, den Längslenker eines Fahrzeugs dreh- bzw. schwenkbar an dem Rahmenelement des Fahrzeugs zu befestigen. An dem Längslenker ist entsprechend die Fahrzeugachse angeordnet, so dass hierdurch eine Relativbewegung (Federbewegung) der Achse in Bezug auf den Rahmen des Fahrzeugs ermöglicht werden kann. Im Stand der Technik ist die Haltevorrichtung im Wesentlichen durch eine irreversible bzw. feste Verschweißung mit dem Rahmenelement verbunden. Problematisch bei derartigen Anordnungen ist jedoch, dass bei einer beschädigten Haltevorrichtung diese nur sehr schwer austauschbar ist.

Die DE 103 08 347 A1 betrifft eine Befestigungsvorrichtung für ein Fahrzeugachsaggregat mit wenigstens einem Fahrzeugrahmen, der eine ebene Auflagefläche für einen mit einer Halteplatte versehenen Lagerbock aufweist, an dem ein Lenker verschwenkbar angelenkt ist.

Die DE 1 555 263 A1 betrifft eine Verankerung für einen an einer Achsanordnung anzubringenden starren Arm, die eine freie, begrenzte Bewegung um eine und längs einer Schwenkachse zulässt, wobei der Arm über ein Aufhängeglied an dem Fahrzeuggestell befestigt und gelagert ist.

Die nachveröffentlichte EP 1 777 085 A2 betrifft eine Achsaufhängung für eine längslenkergeführte Fahrzeugachse mit einer auf jeder Fahrzeugseite unter dem Fahrzeugchassis befestigten, eine Innenwand und eine dazu beabstandete Außenwand aufweisenden Stütze und einem quer zur Fahrzeuglängsrichtung durch die Stütze hindurch geführten Anlenkbolzen für den Längslenker.

Es ist daher Aufgabe der vorliegenden Erfindung, eine Haltevorrichtung für ein Achselement, insbesondere für einen Längslenker eines Fahrzeugs, sowie ein Achssystem für ein Fahrzeug, insbesondere für ein Kraftfahrzeug, vorzusehen, bei welchen die Haltevorrichtung leicht vom Fahrzeug demontiert werden kann, wobei die Befestigung der Haltevorrichtung an dem Rahmen derart gestaltet ist, dass diese hohe Kräfte aufnehmen bzw. übertragen kann.

Diese Aufgabe wird durch eine Haltevorrichtung für ein Achselement, insbesondere für einen Längslenker eines Fahrzeugs, wie eines Kraftfahrzeugs, mit den Merkmalen des Anspruchs 1 sowie durch eine Achssystem für ein Fahrzeug, insbesondere Kraftfahrzeug, mit den Merkmalen des Anspruchs 10 gelöst. Bevorzugte Ausführungsformen ergeben sich aus den abhängigen Ansprüchen.

Erfindungsgemäß ist eine Haltevorrichtung für ein Achselement, insbesondere für einen Längslenker eines Fahrzeugs, wie eines Kraftfahrzeugs, vorgesehen, umfassend ein Basiselement mit einer ersten und einer zweiten Seite und zumindest einem Durchbruch zur Anordnung eines Befestigungselements, um die Haltevorrichtung an einem Rahmenteil des Fahrzeugs zu befestigen, und ein Führungselement, welches ausgelegt ist, das Achselement zu führen, und welches an der ersten Seite des Basiselements angeordnet ist und dieses zumindest teilweise bedeckt, wobei das Führungselement einen Rücksprung aufweist, welcher sich derart über den Durchbruch erstreckt, dass das Führungselement über dem Durchbereich eine Art Brücke ausbildet, so dass das Befestigungselement von der ersten Seite des Basiselements in dem Durchbruch anordenbar ist. Die Haltevorrichtung dient somit insbesondere der Führung des Achselements, welches als Längslenker bzw. Führungslenker bzw. Achslenker ausgebildet sein kann. Das Achselement ist in der Haltevorrichtung vorteilhafterweise dreh- bzw. schwenkbar angeordnet. Die Haltevorrichtung ist aus zumindest einem Basiselement ausgebildet. Das Basiselement weist vorteilhafterweise eine erste Seite bzw. Vorderseite und eine zweite Seite bzw. Rückseite auf, wobei die Haltevorrichtung über die zweite Seite des Basiselements mittelbar oder unmittelbar an dem Rahmen bzw. einem Rahmenelement des Fahrzeugs befestigt bzw. befestigbar ist. Das Basiselement weist ferner vorteilhafterweise zumindest einen Durchbruch auf, welcher sich vorzugsweise von der erste zur zweiten Seite erstreckt. Der Durchbruch kann als Öffnung oder Loch ausgebildet sein, wobei die Querschnittskonfiguration des Durchbruchs beliebig ausgestaltet sein kann. Insbesondere vorteilhafterweise kann der Durchbruch als Langloch ausgebildet sein, dessen Ausrichtung im Wesentlichen quer zu einer Längserstreckung eines im Wesentlichen rechteckigen Basiselements ausgebildet ist. Alternativ kann die Ausrichtung des Langlochs auch im Wesentlichen längs bzw. parallel zur Längserstreckung des im Wesentlichen rechteckigen Basiselements ausgebildet sein. Um die Haltevorrichtung an dem Rahmenteil des Fahrzeugs zu befestigen, ist zumindest ein Befestigungselement vorgesehen, welches in dem Durchbruch angeordnet werden kann. In anderen Worten ist der Durchbruch derart ausgelegt, daß dieser von dem Befestigungselement durchgriffen werden kann. Das Befestigungselement kann als Schraube, Niete, Bolzen oder ähnlichem ausgebildet sein. Hierdurch wird vorteilhafterweise eine reversible Befestigung der Haltevorrichtung an dem Rahmenelement des Fahrzeugs ermöglicht. An der ersten Seite des Basiselements - d.h. der zweiten Seite bzw. Befestigungsseite gegenüberliegend - ist das Führungselement angeordnet bzw. mittelbar oder unmittelbar befestigt. Basiselement und Führungselement sind hierbei so zueinander ausgerichtet, daß das Führungselement die erste Seite des Basiselements zumindest teilweise bedeckt. Insbesondere bedeckt das Führungselement den Bereich des Basiselements, an welchem der zumindest eine Durchbruch vorgesehen ist. Um hierin dennoch das Befestigungselement anzuordnen, weist das Führungselement einen Rücksprung auf, welcher sich über den Durchbruch erstreckt. In anderen Worten bildet der Rücksprung einen Raum zur Einfügung des Befestigungselements von der ersten Seite des Basiselements in dem Durchbruch. Somit bildet das Führungselement in diesem Bereich einen Art Brücke über dem Durchbruch aus. Daher ist es möglich, Befestigungselemente gleichmäßig über die Fläche des Basiselements zu verteilen, um somit eine gleichmäßige Kraftverteilung zu bewirken. Dies führt zu einer besonders stabilen Befestigung des Basiselements bzw. der Haltevorrichtung an dem Rahmenelement des Fahrzeugs. Da das Befestigungselement vorteilhafterweise 'unter' dem Führungselement angeordnet werden kann, ist es somit möglich, die Haltevorrichtung an einem sehr schmalen Rahmenelement des Fahrzeugs zu befestigen, wobei das Rahmenelement insbesondere eine Breite kleiner oder gleich der Breite des Basiselements aufweisen kann, beispielsweise kleiner oder gleich etwa 100 mm. Bei Haltevorrichtungen des Stands der Technik hingegen ist es erforderlich, das Rahmenelement des Fahrzeugs zumindest so breit zu gestalten, daß in dieses neben dem Führungselement angeordnete Befestigungselemente eingreifen können.

Vorzugsweise weist das Basiselement eine vorzugsweise geradzahlige Vielzahl von Durchbrüchen auf, von welchen der zumindest eine Durchbruch unter dem Rücksprung angeordnet ist. Insbesondere vorteilhafterweise sind sechs Durchbrüche vorgesehen, wobei jeweils zwei Durchbrüche - in Längsrichtung des vorzugsweise im Wesentlichen rechteckig ausgebildeten Basiselements gesehen - vor und hinter dem Führungselement angeordnet sind und somit nicht von diesem bedeckt bzw. abgedeckt werden. Die zwei verbleibenden Durchbrüche sind entsprechend unter dem Rücksprung des Führungselements angeordnet. Hierdurch wird eine besonders vorteilhafterweise gleichmäßige Kraftverteilung zwischen Basiselement und Rahmenelement des Fahrzeugs gewährleistet. Wie eingangs erwähnt können ein oder mehrere Durchbrüche als im Wesentlichen quer oder längs bzw. parallel zur Längserstreckung des Basiselements angeordnete Langlöcher ausgebildet sein

Bevorzugterweise weist das Führungselement einen Führungsabschnitt auf, in welchem das Achselement vorzugsweise schwenkbar bzw. rotierbar gelagert ist. Der Führungsabschnitt kann vorteilhafterweise als Loch bzw. Durchbruch ausgebildet sein, weicher sich im Wesentlichen parallel zur ersten und zweiten Seite des Basiselements durch das Führungselement erstreckt. Es versteht sich, dass der Führungsabschnitt ebenfalls derart ausgebildet sein kann, dass das Achselement in diesem ebenfalls linear oder geradlinig geführt sein kann.

Zweckmäßigerweise sind der Rücksprung und der Führungsabschnitt entlang einer zum Basiselement im Wesentlichen senkrecht bzw. lotrecht angeordneten Geraden angeordnet. Hierdurch wird ein besonders günstiger Kraftfluss der zwischen Längslenker, Haltevorrichtung und Rahmenelement des Fahrzeugs übertragenen Kräfte ermöglicht.

Vorzugsweise ist das Basiselement im Wesentlichen plattenförmig ausgebildet, Somit wird eine Haltevorrichtung vorgesehen, die sich besonders einfach an einem Rahmenelement des Fahrzeugs anordnen bzw. befestigen lässt.

Erfindungsgemäß ist das Führungselement als im Wesentlichen U-förmiges Blechelement ausgebildet. Die die Schenkel des U's bildenden Seitenwände des Blechelements sind hierbei vorzugsweise im Wesentlichen parallel zur Längserstreckung des Basiselements und im Wesentlichen senkrecht zur ersten oder zweiten Seite des Basiselements angeordnet.

Bevorzugterweise wird der Rücksprung durch zumindest einen Seitenwandbereich einer Seitenwand gebildet, der zumindest bereichsweise zu der gegenüberliegenden Seitenwand hin gebogen ist. Es kann also ein Teilausschnitt der Seitenwand des Führungselements zu einer gegenüberliegenden Seitenwand hin umgebogen sein, sodass der darunter liegende Durchbruch frei liegt, um das Befestigungselement in dem Durchbruch anzuordnen. Besonders zweckmäßigerweise sind jedoch zwei benachbarte bzw. gegenüberliegende Seitenwandbereiche einer Seitenwand derart umgebogen, dass diese zumindest bereichsweise zu der gegenüberliegenden Seitenwand hin und voneinander weggerichtet sind.

Vorzugsweise sind das Basiselement und das Führungselement einteilig bzw. einstückig ausgebildet. Es versteht sich, daß das Basiselement und das Führungselement alternativ ebenfalls mehrteilig, insbesondere zweiteilig ausgebildet und besonders vorteilhafterweise miteinander verschweißt sein können.

In einer weiteren bevorzugten Ausführungsform ist der Rücksprung durch ein Abdeckelement bzw. Verstärkungselement ausgekleidet. Das Abdeckelement bzw. Verstärkungselement definiert somit zweckmäßigerweise die Grenzen des Rücksprungs zum Basiselement hin. Das Abdeckelement kann die Querschnittsform eines U's aufweisen, dessen freie Enden dem Basiselement hin zugewandt sind. Bei der Ausbildung des Führungselements als im wesentlichen U-förmiges Blechelement kann sich das Deckelement bzw. Verstärkungselement derart zwischen den beiden Seitenwänden des U-förmigen Blechelements erstrecken und an diesem befestigt sein, dass hierdurch eine zusätzliche Verstärkung bewirkt wird.

Weiterhin erfindungsgemäß ist ein Achssystem für ein Fahrzeug, insbesondere Kraftfahrzeug, vorgesehen, umfassend ein Achselement und eine Haltevorrichtung mit einem Basiselement und einem Führungselement, wobei das Basiselement eine erste Seite, eine zweite Seite und zumindest einen Durchbruch zur Anordnung eines Befestigungselements, um die Haltevorrichtung an einem Rahmenelement des Fahrzeugs zu befestigen, aufweist, wobei das Führungselement ausgelegt ist, das Achselement zu führen, und an der ersten Seite des Basiselements angeordnet ist und dieses zumindest teilweise bedeckt, und wobei das Führungselement einen Rücksprung aufweist, welcher sich derart über den Durchbruch erstreckt, dass das Befestigungselement von der ersten Seite des Basiselements in dem Durchbruch anordenbar ist. Es wird somit vorteilhafterweise eine Haltevorrichtung vorgesehen, die reversibel an dem Rahmenelement des Fahrzeugs befestigt werden kann. An der ersten Seite des Basiselements - d h. der zweiten Seite bzw. Befestigungsseite gegenüberliegend - ist das Führungselement angeordnet bzw. mittelbar oder unmittelbar befestigt. Basiselement und Führungselement sind hierbei so zueinander ausgerichtet, dass das Führungselement die erste Seite des Basiselements zumindest teilweise bedeckt. Insbesondere bedeckt das Führungselement den Bereich des Basiselements, an welchem der zumindest eine Durchbruch vorgesehen ist. Um hierin dennoch das Befestigungselement anzuordnen, weist das Führungselement einen Rücksprung auf, welcher sich über den Durchbruch erstreckt. In anderen Worten bildet der Rücksprung einen Raum zur Einfügung des Befestigungselements von der ersten Seite des Basiselements in dem Durchbruch. Somit bildet das Führungselement in diesem Bereich einen Art Brücke über dem Durchbruch aus. Daher ist es möglich, Befestigungselemente gleichmäßig über die Fläche des Basiselements zu verteilen, um somit eine gleichmäßige Kraftverteilung zu bewirken. Dies führt zu einer besonders stabilen Befestigung des Basiselements bzw. der Haltevorrichtung an dem Rahmenelement des Fahrzeugs.

Es versteht sich, dass sämtliche weiteren Vorteile und Merkmale der erfindungsgemäßen Haltevorrichtung für ein Achselement ebenfalls in dem erfindungsgemäßen Achssystem für ein Fahrzeug Anwendung finden können.

Weitere Vorteile und Merkmale ergeben sich aus der nachfolgenden beispielhaften Beschreibung einer bevorzugten Ausführungsform der erfindungsgemäßen Haltevorrichtung mit Bezug auf die beigefügten Figuren. Es zeigen:
- Figur 1: eine perspektivische Ansicht einer beispielhaften Ausführungsform der erfindungsgemäßen Haltevorrichtung.
- Figur 2: eine Seitenansicht der Ausführungsform gemäß Figur 1.
- Figur 3: eine Frontalansicht der Ausführungsform gemäß Figur 1.
- Figur 4: eine Draufsicht der Ausführungsform gemäß Figur 1.
- Figur 5: eine perspektivische Ansicht einer beispielhaften zweiten Ausführungsform der erfindungsgemäßen Haltevorrichtung.
- Figur 6: eine perspektivische Ansicht einer Ausführungsform, die nicht Gegenstand der Erfindung ist.

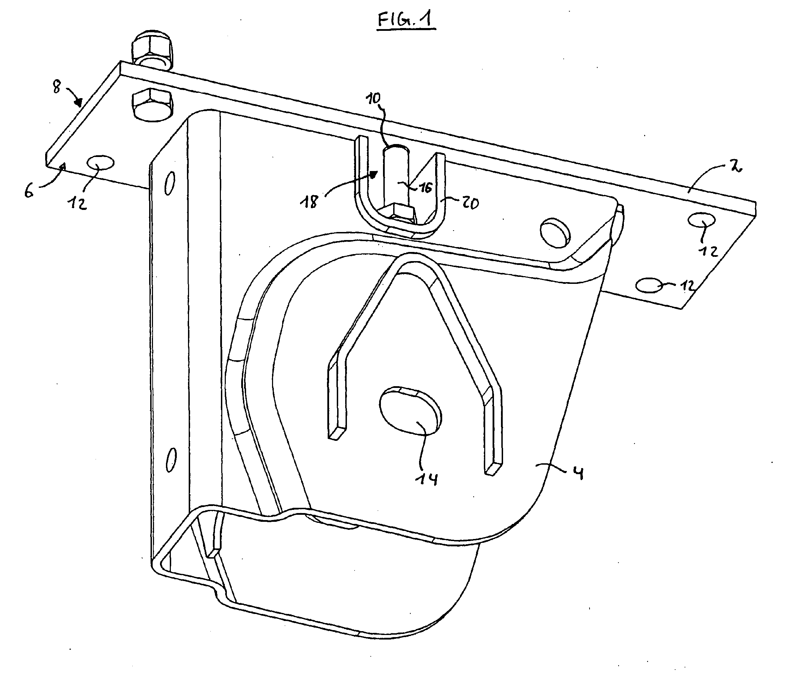

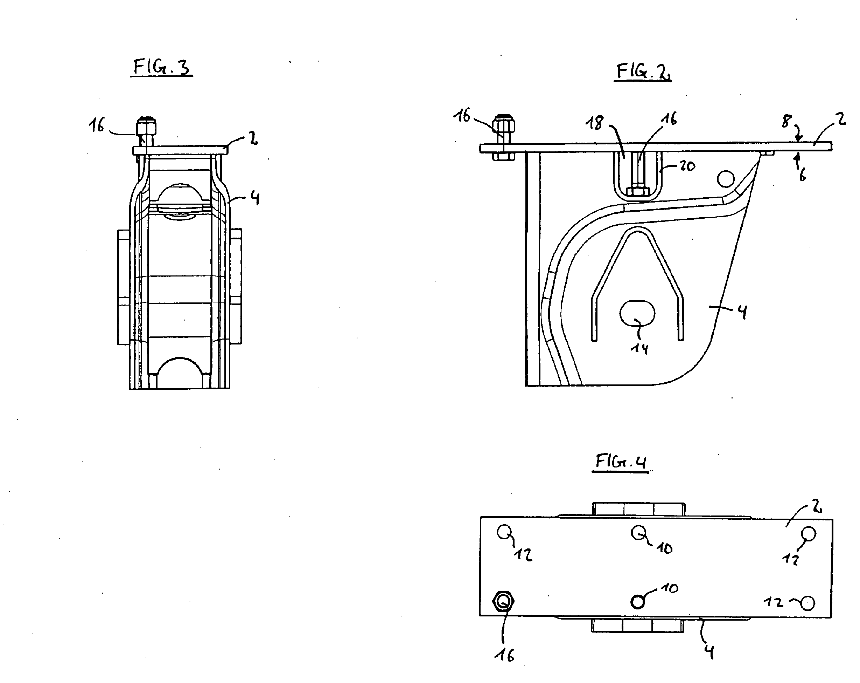

In den **Fig. 1 - 4** ist eine bevorzugte Ausführungsform der erfindungsgemäßen Haltevorrichtung für ein Achselement dargestellt. Die Haltevorrichtung weist ein Basiselement 2 und ein Führungselement 4 auf.

Das Basiselement 2 ist vorteilhafterweise plattenförmig mit einer vorzugsweise im Wesentlichen rechteckigen Grundfläche ausgebildet. In der dargestellten Ausführungsform sind Basiselement 2 und Führungselement 4 mehrteilig ausgebildet und vorteilhafterweise miteinander verschweißt. Es versteht sich, dass das Basiselement 2 und das Führungselement 4 ebenfalls einteilig bzw. einstückig ausgebildet sein können, beispielsweise gegossen. Das Basiselement 2 weist eine Vorderseite bzw. erste Seite 6 und eine Rückseite bzw. zweite Seite 8 auf. Die erste und zweite Seite 6, 8 liegen entsprechend im Wesentlichen gegenüber. Durch das Basiselement 2 erstrecken sich eine Vielzahl von Durchbrüchen 10, 12. Diese erstrecken sich insbesondere von der ersten Seite 6 bis zur zweiten Seite 8 des Basiselements 2 und bilden somit einen Durchgang bzw. ein Durchgangsloch. Die Durchbrüche 12 sind an dem Basiselement 2 derart angeordnet, daß diese an den distalen Endbereichen des Basiselements 2 angeordnet sind. Die Durchbrüche 10 hingegen sind in einem Mitten- bzw. Mittel- bzw. Zentralbereich des Basiselements 2 vorgesehen. Die Durchbrüche 10, 12 in dem Basiselement können zweckmäßigerweise ein (Innen-)Gewinde aufweisen, um somit die Funktion einer Mutter zu übernehmen, sodass keine Muttern zur Befestigung der Haltevorrichtung an einem Rahmenelement des Fahrzeugs benötigt werden.

An dem Mittenbereich des Basiselements 2 ist das Führungselement 4 an der ersten Seite 6 angeordnet bzw. befestigt. Das Führungselement 4 erstreckt sich somit über die Durchbrüche 10.

Das Führungselement 4 ist vorteilhafterweise als im wesentlichen U-förmiges Blechelement ausgebildet, dessen die Seitenwandungen (gebildet durch die Schenkel des U's) im wesentlichen parallel zur Längserstreckung des Basiselements 2 angeordnet sind. An den Seitenwandungen des Führungselements 4 ist ein Führungsabschnitt 14 vorgesehen, der in Form eines Lochs bzw. Durchbruchs ausgebildet sein kann. Der Führungsabschnitt 14 dient der Lagerung des Achselements, welches die Fahrzeugachse trägt. Hierbei ist der Führungsabschnitt 14 derart ausgestaltet, daß das Achselement an diesem schwenkbar bzw. rotierbar angelenkt ist. Eine lineare oder geradlinige Führung ist jedoch ebenfalls möglich.

Zur Befestigung der Haltevorrichtung können Befestigungselemente 16, wie Schrauben, Nieten oder Bolzen vorgesehen sein. Mittels der Befestigungselemente 16 wird die Haltevorrichtung an einem Rahmenelement des Fahrzeugs angeordnet bzw. befestigt. Zur Montage der Befestigungselemente 16 können diese von der ersten Seite 6 des Basiselements 2 in die Durchbrüche 12 eingeführt werden und mit dem Rahmenelement verschraubt werden. Im Bereich der Durchbrüche 10 ist jedoch die erste Seite 6 des Basiselements 2 von dem Führungselement 4 bedeckt. Um die Befestigungselemente 16 in diesem Bereich ebenfalls von der ersten Seite 6 durch das Basiselement 2 hindurch zu führen, weist das Führungselement 4 einen Rücksprung 18 auf. Dieser erstreckt sich derart über den Durchbruch 10, daß das Befestigungselement 16 von der erste Seite 6 des Basiselements 2 in dem Durchbruch 10 anordenbar ist.

Zweckmäßigerweise ist das Befestigungselement 16 eine Schraube oder Mutter. Das Befestigungselement 16 kann ebenfalls ein beliebig anderer Körper mit einem nicht rotationssymmetrischen Kopf sein. Somit ist es besonders vorteilhafterweise möglich, den Rücksprung 18 derart auszubilden, dass dieser im Wesentlichen an die geometrische Konfiguration zumindest eines Bereichs der Befestigungselemente 16 angepasst ist. Bei einer Schraube oder einer Mutter kann der Rücksprung 18 somit die Mutter oder den Kopf der Schraube derart aufnehmen, dass dieser aufgrund der in Längsrichtung des Basiselements 2 gesehenen angepassten Breite des Rücksprungs 18 nicht um seine Längsachse rotieren kann. Hierdurch ist es vorteilhafterweise nicht mehr notwendig, ein Lagesicherungswerkzeug, wie beispielsweise einen Schraubenschlüssel, während der Montage der Haltevorrichtung an dem Rahmenelement des Fahrzeugs zu nutzen.

Zur Verbesserung der Festigkeit der Haltevorrichtung kann diese vorteilhafterweise ein Verstärkungselement bzw. Abdeckelement 20 aufweisen, welches mit dem Führungselement 4 fest verbunden ist (z.B. durch eine Verschweißung) und den Rücksprung 18 derart auskleidet, dass es diesen zum Basiselement 2 hin begrenzt, Das Abdeckelement 25 kann sich hierbei über die beiden Seitenflächen bzw. -wandungen des Führungselements 4 derart erstrecken, dass es dem Führungselement 4 eine zusätzliche Stabilität bzw. Stabilisierung verleiht.

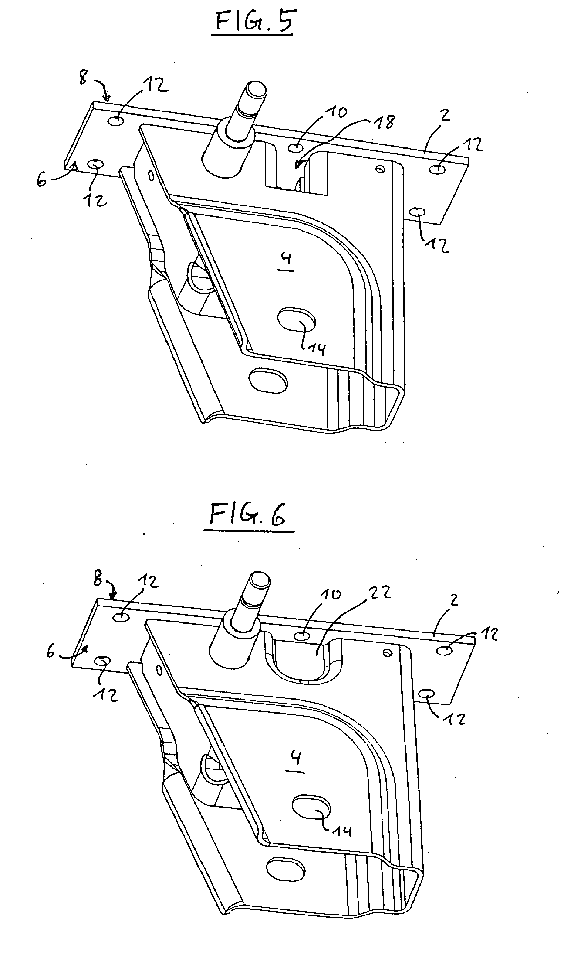

Fig. 5 zeigt eine weitere perspektivische Ansicht einer beispielhaften bevorzugten zweiten Ausführungsform der erfindungsgemäßen Haltevorrichtung. Hierbei ist der Durchbruch 10 durch an den beiden Seitenwänden des Führungselements 4 ausgebildeten Seitenwandbereichen vorgesehen. Diese Seitenwandbereiche sind derart gestaltet, dass diese zumindest bereichsweise zu der gegenüberliegenden Seitenwand hin umgebogen sind. Es versteht sich, dass jede über einem Durchbruch 10 befindliche Seitenwand lediglich einen Seitenwandbereich aufweisen kann, der zu der gegenüberliegenden Seitenwand hin umgebogen ist. Besonders bevorzugterweise wird der Rücksprung 18 jedoch durch zwei Seitenwandbereiche einer Seitenwand gebildet, die zu der gegenüberliegenden Seitenwand hin und voneinander weggebogen sind, um somit einen Spalt zu definieren. Hierdurch wird eine besonders einfache und kostengünstige Variante der Haltevorrichtung ermöglicht.

In Fig. 6 ist eine weitere perspektivische Ansicht einer nicht durch die Ansprüche gedeckten Ausführungsform einer Haltevorrichtung dargestellt. Die in Figur 6 dargestellte Variante unterscheidet sich von den vorbeschriebenen Varianten der Haltevorrichtung insbesondere dahingehend, dass ein Rücksprung 22 vorgesehen ist, welcher sich derart über den Durchbruch 10 erstreckt, dass ein Befestigungselement 16 von der ersten Seite 6 des Basiselements 2 in dem Durchbruch 10 anordenbar ist. Der Rücksprung 22 ist in einer Seitenwand des Führungselements 4 derart ausgebildet, dass dieser eine zur gegenüberliegenden Seitenwand des Führungselements 4 hingerichtete Vertiefung bzw. Einbuchtung bzw. Senke definiert. Die (Einprägungs-)Tiefe des Rücksprungs 22 gegenüber der Seitenwand des Führungselements 4 kann hierbei vorteilhafterweise derart angepasst sein, dass ein in Form einer Schraube oder einer Mutter ausgebildetes Befestigungselement 16 sich nicht nach Einführen in den Durchbruch 10 um dessen Längsachse drehen kann. Hierdurch wird vorteilhafterweise zusätzlich eine Rotationssicherung der Befestigungselemente 16 ermöglicht, da der Eingriffsbereich (Schraubenkopf oder Mutter) des Befestigungselements 16 mit der zurückgesetzten bzw. vertieften Wandung des Rücksprungs 22 in Eingriff gelangt.

Es wird somit eine Haltevorrichtung geschaffen, die reversibel an einem Rahmenelement des Fahrzeugs anordenbar ist, wobei die Stabilität der Haltevorrichtung und der Befestigung der Haltevorrichtung an dem Rahmenelement gewährleistet werden können, da die vorteilhafte Schraubverbindung mittels der Befestigungselemente gleichmäßig über die Fläche des Basiselements 2 vorgesehen werden kann.

### Bezugszeichenliste

- 2: Basiselement
- 4: Führungselement
- 6: erste Seite
- 8: zweite Seite
- 10: Durchbruch
- 12: Durchbruch
- 14: Führungsabschnitt
- 16: Befestigungselement
- 18: Rücksprung
- 20: Abdeckelement
- 22: Rücksprung

## Patentansprüche

1. Haltevorrichtung für ein Achselement für einen Längslenker eines Fahrzeugs, wie eines Kraftfahrzeugs, umfassend
ein Basiselement (2) mit einer ersten Seite (6) und einer zweiten Seite (8) und zumindest einem Durchbruch (10) zur Anordnung eines Befestigungselements (16), um die Haltevorrichtung an einem Rahmenteil des Fahrzeugs zu befestigen, und
ein Führungselement (4), welches ausgelegt ist, das Achselement zu führen, und welches an der ersten Seite (6) des Basiselements (2) angeordnet ist und dieses zumindest teilweise bedeckt,
wobei das Führungselement (4) als im Wesentlichen U-förmiges Blechelement ausgebildet ist und an den die Schenkel des U's bildenden Seitenwänden des Führungselements (4) ein Führungsabschnitt (14) vorgesehen ist, in welchem das Achselement gelagert ist, **dadurch gekennzeichnet,**
**dass** das Führungselement (4) einen Rücksprung (18) aufweist, welcher sich derart über den. Durchbruch (10) erstreckt, dass das Führungselement (4) über dem Durchbruch (10) eine Art Brücke ausbildet, so dass das Befestigungselement (16) von der ersten Seite (6) des Basiselements (2) in dem Durchbruch (10) anordenbar ist.

2. Haltevorrichtung nach Anspruch 1, wobei das Basiselement (2) eine vorzugsweise geradzahlige Vielzahl von Durchbrüchen (10, 12) aufweist, von welchen der zumindest eine Durchbruch (10) unter dem Rücksprung (18, 22) angeordnet ist.

3. Haltevorrichtung nach einem der vorhergehenden Ansprüche, wobei das Führungselement (4) einen Führungsabschnitt (14) aufweist, in welchem das Achselement vorzugsweise schwenkbar gelagert ist.

4. Haltevorrichtung nach Anspruch 3, wobei der Rücksprung (18, 22) und der Führungsabschnitt (14) entlang einer zum Basiselement (2) im Wesentlichen senkrecht angeordneten Geraden angeordnet sind.

5. Haltevorrichtung nach einem der vorhergehenden Ansprüche, wobei das Basiselement (2) im Wesentlichen plattenförmig ausgebildet ist.

6. Haltevorrichtung nach einem der vorhergehenden Ansprüche, wobei der Rücksprung (18) durch zumindest einen Seitenwandbereich des Führungselements (4) gebildet wird, der zumindest bereichsweise zu der gegenüberliegenden Seitenwand des Führungselements (4) hin gebogen ist.

7. Haltevorrichtung nach einem der vorhergehenden Ansprüche, wobei das Basiselement (2) und das Führungselement (4) einteilig bzw. einstückig ausgebildet sind.

8. Haltevorrichtung nach einem der Ansprüche 1 - 6, wobei das Basiselement (2) und das Führungselement (4) mehrteilig, insbesondere zweiteilig, ausgebildet und vorzugsweise miteinander verschweißt sind.

9. Haltevorrichtung nach einem der vorhergehenden Ansprüche, wobei der Rücksprung (18) durch ein Abdeckelement (20) ausgekleidet ist.

10. Achssystem für ein Fahrzeug, insbesondere Kraftfahrzeug, umfassend
ein Achselement und
eine Haltevorrichtung nach einem der vorhergehenden Ansprüche.

## Claims

1. Retaining device for an axle element for a trailing arm of a vehicle, such as a motor vehicle, comprising
a base element (2) having a first side (6) and a second side (8) and at least one aperture (10) for arranging a fastening element (16) so as to mount the retaining device on a frame part of the vehicle, and
a guiding element (4) designed to guide the axle element, and which is arranged on the first side (6) of the base element (2) and covers the latter at least partially,
wherein the guiding element (4) is essentially a U-shaped metal sheet member and a guiding section (14) is provided at the side walls of the guiding element (4) forming the legs of the U, in which guiding section the axle element is located, **characterized in**
**that** the guiding element (4) has a recess (18) which extends above the aperture (10) in such a way that the guiding element (4) forms a kind of a bridge above the aperture (10) so that the fastening element (16) is arrangeable in the aperture (10) from the first side (6) of the base element (2).

2. Retaining device according to claim 1, wherein the base element (2) has a preferably even-numbered plurality of apertures (10, 12) of which at least one aperture (10) is arranged below the recess (18, 22).

3. Retaining device according to any one of the preceding claims, wherein the guiding element (4) has a guiding section (14) in which the axle element is mounted preferably pivotably.

4. Retaining device according to claim 3, wherein the recess (18, 22) and the guiding section (14) are arranged along a straight line which is essentially perpendicular to the base element (2).

5. Retaining device according to any one of the preceding claims, wherein the base element (2) is essentially plate-shaped.

6. Retaining device according to any one of the preceding claims, wherein the recess (18) is formed by at least one side wall section of the guiding element (4), which is at least sectionally bent towards the opposite side wall of the guiding element (4).

7. Retaining device according to any one of the preceding claims, wherein the base element (2) and the guiding element (4) are formed as one part or one piece.

8. Retaining device according to any one of claims 1 to 6, wherein the base element (2) and the guiding element (4) are formed as several parts, in particular two parts, and are preferably welded together.

9. Retaining device according to any one of the preceding claims, wherein the recess (18) is lined with a covering element (20).

10. Axle system for a vehicle, in particular a motor vehicle, comprising
an axle element and
a retaining device according to any one of the preceding claims.

## Revendications

1. Dispositif de support pour un élément d'essieu destiné à un bras longitudinal d'un véhicule, comme un véhicule automobile, comprenant
un élément de base (2) avec un premier côté (6) et un second côté (8) et au moins une traversée (10) pour agencer un élément de fixation (16) afin de fixer le dispositif de support sur une partie de châssis du véhicule, et
un élément de guidage (4) conçu pour guider l'élément d'essieu et agencé sur le premier côté (6) de l'élément de base (2) en recouvrant celui-ci au moins partiellement,
dans lequel l'élément de guidage (4) est réalisé sous la forme d'un élément en tôle sensiblement en forme de U, et il est prévu, sur les parois latérales de l'élément de guidage (4) qui forment les branches du U, un tronçon de guidage (14) dans lequel est monté l'élément d'essieu, **caractérisé en ce que**
l'élément de guidage (4) comporte un ressaut (18) qui s'étend au-delà de la traversée (10) de telle manière que l'élément de guidage (4) réalise au-dessus de la traversée (10) une sorte de pontet, de sorte que l'élément de fixation (16) est susceptible d'être agencé dans la traversée (10) depuis le premier côté (6) de l'élément de base (2).

2. Dispositif de support selon la revendication 1, dans lequel l'élément de base (2) comprend une multiplicité, de préférence en nombre pair, de traversées (10, 12), parmi lesquelles ladite au moins une traversée (10) est agencée au-dessous du ressaut (18, 22).

3. Dispositif de support selon l'une des revendications précédentes, dans lequel l'élément de guidage (4) comprend un tronçon de guidage (14) dans lequel est monté l'élément d'essieu, de préférence avec possibilité de pivotement.

4. Dispositif de support selon la revendication 3, dans lequel le ressaut (18, 22) et le tronçon de guidage (14) sont agencés le long d'une droite disposée sensiblement verticalement par rapport à l'élément de base (2).

5. Dispositif de support selon l'une des revendications précédentes, dans lequel l'élément de base (2) est réalisé sensiblement en forme de plaque.

6. Dispositif de support selon l'une des revendications précédentes, dans lequel le ressaut (18) est formé par au moins une zone de paroi latérale de l'élément de guidage (4), laquelle est cintrée au moins localement vers la paroi latérale opposée de l'élément de guidage (4).

7. Dispositif de support selon l'une des revendications précédentes, dans lequel l'élément de base (2) et l'élément de guidage (4) sont réalisés d'une seule pièce, ou d'un seul tenant.

8. Dispositif de support selon l'une des revendications 1 à 6, dans lequel l'élément de base (2) et l'élément de guidage (4) sont réalisés en plusieurs pièces, en particulier en deux pièces, lesquelles sont de préférence soudées les unes aux autres.

9. Dispositif de support selon l'une des revendications précédentes, dans lequel le ressaut (18) est habillé par un élément de recouvrement (20).

10. Système d'essieu pour un véhicule, en particulier un véhicule automobile, comprenant
un élément d'essieu, et
un dispositif de support selon l'une des revendications précédentes.
